# EUROPÄISCHE PATENTSCHRIFT

(11) **EP 0 614 263 B1**
(45) Veröffentlichungstag und Bekanntmachung des Hinweises auf die Patenterteilung: **21.01.1998**
(21) Anmeldenummer: 94200515.8
(22) Anmeldetag: 01.03.1994
(51) Int. Cl.: H02K 19/06

(54) **Einphasiger Reluktanzmotor und Anordnung zum Starten dieses Motors in einer gewünschten Drehrichtung**
Single-phase reluctance motor capable of starting in a desired rotational direction
Moteur monophasé à réluctance capable de démarrer dans un sens de rotation désiré

(30) Priorität: 04.03.1993 DE 4306727
(43) Veröffentlichungstag der Anmeldung: 07.09.1994
(73) Patentinhaber: Philips Patentverwaltung GmbH, 22335 Hamburg (DE); Philips Electronics N.V., 5621 BA Eindhoven (NL)
(72) Erfinder: Lürkens, Peter, Dr.-Ing., D-20097 Hamburg (DE)
(74) Vertreter: von Laue, Hanns-Ulrich, Dipl.-Ing.

(56) Entgegenhaltungen:
- EP-A- 0 253 436
- WO-A-86/06891
- US-A- 3 597 646
- US-A- 3 956 678
- PATENT ABSTRACTS OF JAPAN, vol. 13, no. 8 (E-702), 10. Januar 1989 & JP-A-63 217 956 (KUSATSU), 12. September 1988
- PATENT ABSTRACTS OF JAPAN, vol. 5, no. 40 (E-049), 17. März 1981 & JP-A-55 162 871 (CITIZEN), 18. Dezember 1980

## Beschreibung

Die Erfindung bezieht sich auf einen einphasigen Reluktanzmotor, der aus einem feststehenden und einem gegenüber diesem beweglichen Bauteil (Stator und Rotor) gebildet wird, die zwischen sich einen Luftspalt einschließen und von denen der eine einen magnetisch durchflutbaren, ferromagnetischen Körper mit ausgeprägten Polteilen und der andere einen elektrisch erregbaren, ferromagnetischen Körper aufweisen mit ausgeprägten Polteilen, wobei einer der durchflutbaren ferromagnetischen Bauteile derart ausgebildet ist, daß er erste Bereiche aufweist, die eine niedrige Sättigungsinduktivität aufweisen und zweite Bereiche, die eine höhere Sättigungsinduktivität aufweisen, die bewirken, daß eine gegebenenfalls abgeglichene Stellung des beweglichen Bauteils bei steigendem Erregerstrom durch den Einfluß der verschiedenen Sättigungseigenschaften nun unabgeglichen ist und sich das bewegliche Bauteil in Richtung auf eine neue abgeglichene Stellung zu drehen beginnt.

Ein derartiger einphasiger Reluktanzmotor ist aus der WO-A-86/06891 bekannt.

Reluktanzmotoren bestehen im wesentlichen aus einem feststehenden Bauteil (Stator) und einem beweglichen Bauteil (Rotor), wobei der Stator eine ein- oder mehrphasige elektrische Wicklung trägt, die einen magnetischen Fluß durch Stator und Rotor erzeugt, wenn sie von einem Strom durchflossen wird. Rotor und Stator bestehen aus ferromagnetischen Materialien, die bis zu einer gewissen Maximalinduktion, der Stättigungsinduktion, leicht magnetisierbar sind. Die Induktion im Material nimmt bei steigendem Erregerstrom in der elektrischen Wicklung zunächst schnell und danach nur noch wenig zu. Dieses Verhalten wird Sättigung genannt. Ein einphasiger Motor ist vom Aufbau her besonders einfach.

Die unter Stromeinfluß auftretenden magnetischen Kräfte bewirken ein Verdrehung des Rotors in Richtung auf eine Stellung, in der die gespeicherte magnetische Energie maximal ist. Um den Motor aus jeder Ausgangslage heraus starten zu können, weist der aus der WO-A-86/06891 bekannte einphasige Reluktanzmotor am Rotor und Stator sich in Umfangsrichtung des Motors erstreckende Einbuchtungen auf, welche für den magnetischen Fluß eine Verengung darstellen. Infolge dieser Verengung für den magnetischen Fluß gerät das magnetische Material bei steigendem Erregerstrom an diesen Einbuchtungen in einem sehr kleinen, im wesentlichen punktförmigen Bereich früher in die Sättigung als in den übrigen Stator- bzw. Rotorbereichen, wodurch eine gegebenenfalls abgeglichene Stellung des Rotors bei steigendem Erregerstrom nun unabgeglichen ist und sich der Rotor in Richtung auf eine neue abgeglichene Stellung zu drehen beginnt.

Die sich in Umfangsrichtung erstreckenden Einbuchtungen stellen eine mechanische Schwächung des Rotors dar und können insbesondere bei hohen Drehzahlen im Bereich der Einbuchtung zu einem Abbrechen von Teilen des Rotors führen. Zudem ist eine derartige Anordnung sehr geräuschträchtig, da hohe Drehmomentspitzen auftreten.

Aus der US-A-3 956 678 ist ein zweiphasiger Schrittmotor bekannt, dessen Rotor in Teilbereichen mit radialen Schlitzen versehen ist. Diese radialen Schlitze haben die Aufgabe, dafür zu sorgen, daß das von diesem Motor erzeugte Drehmoment über den gesamten Drehwinkelbereich des Rotors möglichst gleichmäßig ist.

Aus der US-A-3 597 646 ist ein Reluktanzmotor bekannt, dessen Rotorpolteile mit elektrisch leitendem Material gefüllte, radiale Schlitze aufweisen. Die zwischen den Schlitzen verbleibenden ferromagnetischen Stege weisen verschiedene Breiten auf, so daß erste Bereiche mit niedrigerer Sättigungsinduktion und zweite Bereiche mit höherer Sättigungsinduktion gebildet werden.

Aus der EP-A-0 253 436 ist ein Reluktanzmotor bekannt, dessen Statorpole eine Querschnittsverengung für den magnetischen Fluß aufweisen. Bei steigendem Erregerstrom gerät das Magnetmaterial des Stators an dieser Verengungsstelle zuerst in die Sättigung, wodurch sich der Rotor in Richtung auf eine neue, abgeglichene Stellung zu drehen beginnt.

Es ist Aufgabe der Erfindung, einen geräuscharmen, mechanisch stabilen einphasigen Reluktanzmotor zu schaffen, der aus jeder Stellung heraus ein Drehmoment entwickelt, so daß der Motor aus jeder Ausgangslage heraus gestartet werden kann, wobei es auch möglich sein soll, die anfängliche Drehrichtung beliebig vorzugeben.

Die gestellte Aufgabe ist bei einer ersten Ausführungsform der Erfindung dadurch gelöst, daß die ersten und zweiten Bereiche aus längs des Luftspaltumfanges flächenhaft verteilten magnetisch durchflutbaren ferromagnetischen Materialien mit unterschiedlichen Sättigungseigenschaften gebildet sind und daß diese Bereiche sowohl im Rotor als auch im Stator vorgesehen sein können.

Eine derartige Konstruktion ist fertigungstechnisch leicht zu realisieren und weist eine hohe mechanische Stabilität auf. Zudem weist diese Anordnung aufgrund der flächenhaft verteilten ersten Sättigungsbereiche nur geringe Drehmomentspitzen auf und ist dementsprechend geräuscharm.

Gemäß einer anderen Ausführungsform der Erfindung ist vorgesehen, daß das ferromagnetische Bauteil ohne Erregerwicklung im Bereich der ausgeprägten Polteile mit längs des Luftspaltumfanges flächenhaft verteilten radialen Schlitzen versehen ist und die Breite der zwischen den Schlitzen verbleibenden ferromagnetischen Stege in den ersten Bereichen mit niedriger Sättigungsinduktion kleiner ist als die Breite der Stege zwischen den Schlitzen in den Bereichen mit höherer Sättigungsinduktion.

Auch diese Konstruktion ist sehr geräuscharm, da der magnetische Fluß zwischen Stator und Rotor bei beginnender Überlappung zwischen Statorzahn und Rotorzahn nicht sprunghaft, sondern verhältnismäßig langsam ansteigt. Es treten nur geringe Drehmomentspitzen auf. Zudem ist die radiale Anordnung der Schlitze mechanisch stabiler als in Umfangsrichtung angeordnete Schlitze.

Da Reluktanzmotoren im allgemeinen aus gestanzten Blechen zusammengesetzt sind, lassen sich die Schlitze bei der Fertigung der Rotorbleche im gleichen Arbeitsgang herstellen. Der Wert der Sättigungsinduktion in den ersten und zweiten Bereichen läßt sich so mit einfachen Mitteln beliebig einstellen.

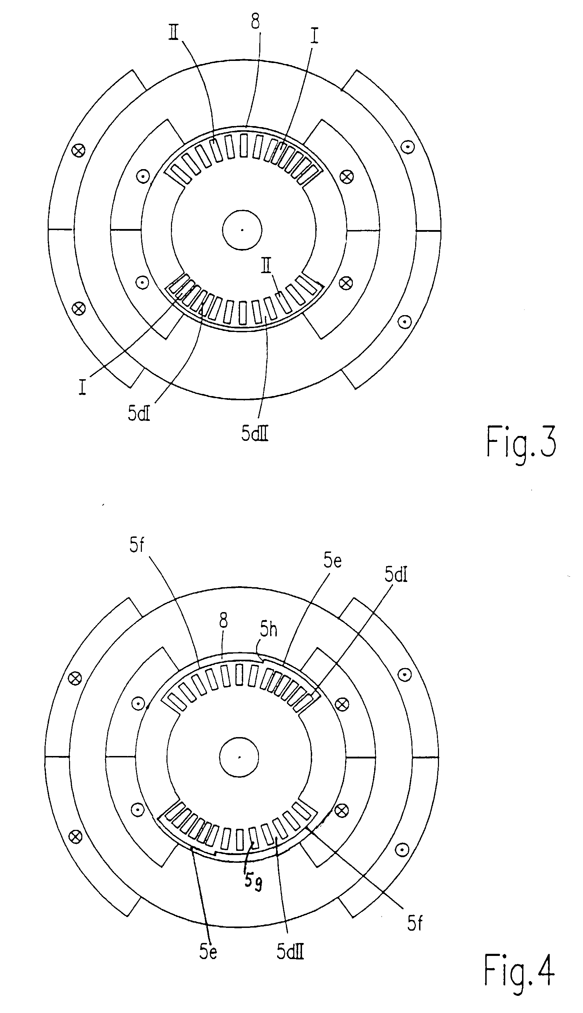

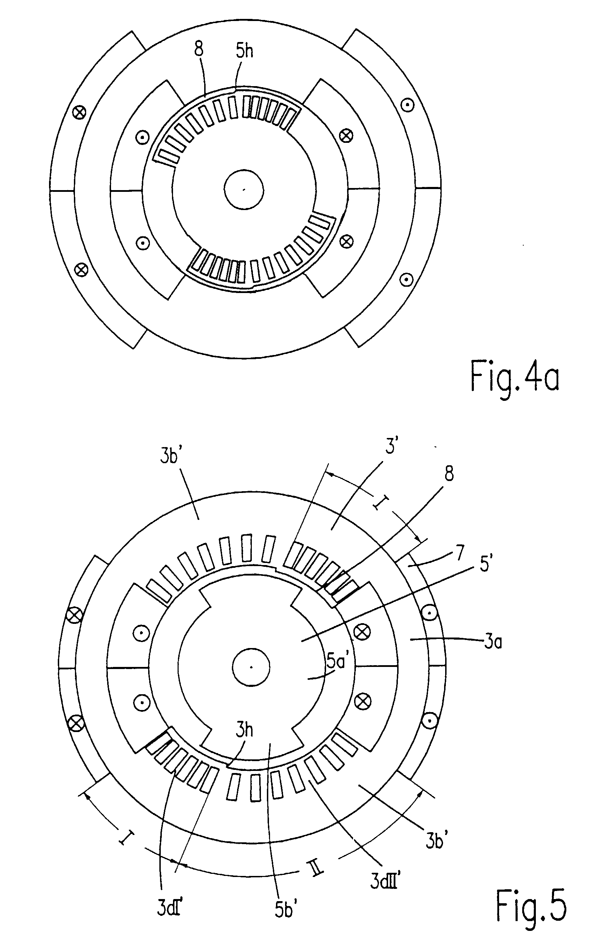

Wenn der Motor anstrebt, durch Drehen des beweglichen Bauteiles einen möglichst großen Teil der gegenüberliegenden ferromagnetischen Teile, beispielsweise der Zähne mit hoher Sättigungsinduktion zu überlappen, dann ist der maximal erreichbare Winkel zwischen der Stellung des drehbeweglichen Bauteiles im ungesättigten Zustand und im gesättigten Zustand ein nutzbarer Anwurfwinkel α. Dieser nutzbare Anwurfwinkel α läßt sich dadurch vergrößern, daß die Luftspaltbreite mindestens in einem Teil der zweiten Bereiche größer als in den ersten Bereichen ist. Dies führt im ungesättigten Zustand dazu, daß das drehbewegliche Bauteil sich auf die Seite verstellt, wo der Luftspalt minimal (Fig. 4a) ist. Wird die Induktion durch Steigerung der Stromdurchflutung nun mehr und mehr erhöht, bis die am Luftspalt liegenden ferromagnetischen Bereiche gesättigt sind, dann tritt der Einfluß des Luftspaltes hinter dem der Sättigung zurück, und der Rotor dreht sich zur Seite mit der höheren Sättigungsinduktion. Dies macht es möglich, den Motor in einer gewünschten Richtung anlaufen zu lassen unter der Voraussetzung, daß die Last des Motors beim Anlauf eine kritische Grenze nicht überschreitet.

Die kritische Last beim Anlauf ergibt sich daraus, daß der Anwurfimpuls ausreichen muß, um den Motor von seiner abgeglichenen Stellung aus mindestens bis zur nächsten Überlappungsstellung von bevorzugten ferromagnetischen Teilen (Zähnen) der Motorbauteile zu bewegen.

Die Erfindung wird anhand der Zeichnungen näher erläutert. Es zeigen:
Fig. 1 einen Reluktanzmotor mit einem feststehenden ferromagnetischen Stator mit zwei Polzähnen, in dem mittels einer Erregerwicklung eine magnetische Durchflutung erzeugt werden kann; die Zähne des ferromagnetischen Rotors sind in Umfangsrichtung mit Zahnbereichen unterschiedlicher Sättigungsinduktion versehen,
Fig. 2 den Reluktanzmotor nach Fig. 1 in einer Stellung, bei der die magnetische Energie minimal ist,
Fig. 3 den Reluktanzmotor nach Fig. 1, wobei die beiden Zähne des drehbeweglichen Rotors erste Bereiche mit niedriger Sättigungsinduktion und zweite Bereiche mit hoher Sättigungsinduktion aufweisen, wobei die unterschiedlichen Sättigungswerte dadurch erreicht werden, daß radiale Stege in den Rotorzähnen im Bereich niedriger Sättigungsinduktion schmaler sind als im Bereich hoher Sättigungsinduktion und die Schlitze zum Luftspalt hin verschlossen sind,
Fig. 4 und 4a einen Reluktanzmotor mit geschlitzten Rotorzähnen, wobei die ersten Zahnbereiche mit niedriger Sättigungsinduktion gegenüber den Zähnen des Stators einen kleineren Luftspalt aufweisen als die Rotorzahnbereiche mit höherer Sättigungsinduktion,
Fig. 5 den Reluktanzmotor nach den Fig. 1 bis 4a, wobei aber Rotor- und Statorkonfiguration vertauscht sind.

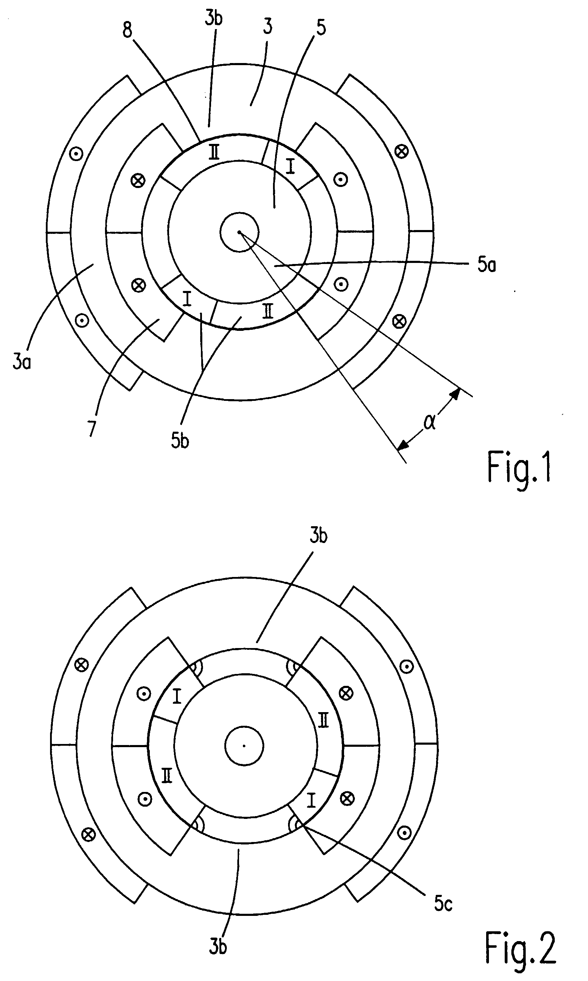

Fig. 1 zeigt ein Schnittbild durch einen Reluktanzmotor mit einem feststehenden Bauteil 3, dem Stator, und einem umlauffähigen Bauteil 5, dem Rotor. Der Stator ist erregbar mittels Wicklungen 7, so daß sich am Luftspalt 8 ein magnetisches Feld ausbilden kann. Die Wicklungen 7 umschließen die Statorjoche 3a.

Der ferromagnetische Rotor 5 weist einen Eisenkörper 5a auf mit Polzähnen 5b, wobei sich jeder Polzahn aus einem Bereich I und II zusammensetzt, die in Umfangsrichtung aneinander anschließen. Die Polzahnbereiche I können aus einem ferromagnetischen Material mit niedriger Sättigungsinduktion bestehen. Die Polzahnbereiche II bestehen demgegenüber aus einem ferromagnetischen Material mit hoher Sättigungsinduktion.

Wie Fig. 2 zeigt, werden wieder Stellungen mit minimaler magnetischer Energie von Bereichen der Rotorzähne mit unterschiedlicher Sättigungsinduktion erfaßt, so daß auch hier die Vorzugsrichtung des Rotors erregerstromabhängig ist. Mit 5c ist das auftretende Statorfeld zwischen den Zähnen 3b und den Bereichen I dargestellt, durch das die Vorzugsrichtung entsteht.

Fig. 3 zeigt, wie man mit einem einheitlichen ferromagnetischen Material ebenfalls den Effekt unterschiedlicher Sättigungsinduktion erreichen kann. Die Polzähne 5b des Rotors 5 sind ebenso wie der Kern des Rotors 5 aus einem einheitlichen Blechmaterial gebildet. In den Zähnen befinden sich radial verlaufende Schlitze, die am Luftspalt 8 geschlossen sind. Die Stege 5dI zwischen den Schlitzen in den ersten Bereichen I sind schmaler gehalten als die Stege 5dII in den zweiten Bereichen II. Auf diese Weise ergeben sich auch bei dem aus einem einheitlichen Blechmaterial geschichteten Rotor nach Fig. 3 im ersten Bereich I eine niedrige effektive Sättigungsinduktion; in dem zweiten Bereich II ergibt sich eine hohe Sättigungsinduktion. Im ungesättigten Zustand spielt zunächst die Breite der Stege und damit die unterschiedliche Sättigungsinduktion keine Rolle, so daß sich der Rotor magnetisch symmetrisch zur Rotorzahnmitte verhält. Die abgeglichene Stellung ist damit wie in Fig. 1 gezeichnet. Wird der Strom aber oberhalb dieser Grenze eingestellt, dann wächst die Induktion in dem bereits gesättigten ersten Bereich I langsamer als in dem noch nicht gesättigten zweiten Bereich II der Rotorzähne. Der Rotor strebt deshalb nun einer Stellung zu, bei der sich ein möglichst großer Teil der Rotorzähne mit hoher Sättigungsinduktion überlappen. Der Rotor beginnt sich also zu drehen. Der dabei erreichte maximale Winkel α zwischen der Stellung des Rotors bei ungesättigtem Zustand und bei stark gesättigtem Zustand ist dabei die (Differenz von Rotor und Statorzahnwinkel)/2.

Der nutzbare Anwurfwinkel α läßt sich dadurch vergrößern, daß der Luftspalt zwischen Rotor und Stator im Bereich der Zähne ebenfalls ungleichmäßig ausgebildet ist, und zwar so, daß dieser dem Sättigungseffekt entgegenwirkt. In den Bereichen I mit schmaleren Stegen zwischen den Schlitzen ist der Luftspalt 5e dabei kleiner als der Luftspalt 5f in den Bereichen II mit breiteren Stegen. Dazu sind im Bereich 5f des Luftspaltes 8 die Zähne 3b weiter vom Rotor entfernt als im Bereich 5e des Luftspaltes 8. Im ungesättigten Fall führt dies ebenso wie bei der Darstellung nach Fig. 1 und 3 dazu, daß der Rotor nach dem Einschalten eines Gleichstromes nicht mehr so steht, daß die Zahnmitten fluchten, sondern daß der Rotor nun dort hin verstellt ist, wo der Luftspalt minimal ist (Fig. 4a). Es ist also ein größerer Teil der ersten Bereiche in den Bereich der Zahnüberlappung gedreht. Wird die Induktion nun mehr und mehr erhöht, bis die Zähne gesättigt sind, dann tritt der Einfluß des Luftspaltes hinter den der Sättigung zurück, und der Rotor dreht sich zur Seite mit der höheren Sättigungsinduktion. Dabei ist der maximal erreichbare Anwurfwinkel die Differenz zwischen Rotor und Statorzahnwinkel.

Der Reluktanzmotor nach Fig. 4 kann in zwei Richtungen anlaufen, wobei aber immer vorauszusetzen ist, daß die Last des Motors beim Anlauf eine kritische Grenze nicht überschreitet. Die kritische Grenze ist dadurch bestimmt, daß ein Anlauf nicht erfolgt, wenn der Anwurfimpuls, der über den erreichbaren Anwurfwinkel erfolgt, nicht ausreicht, um den Motor von seiner abgeglichenen Stellung, im ungesättigten Zustand, aus mindestens bis zur nächsten Überlappung von Rotor und Statorzähnen zu bewegen.

Fig. 5 zeigt eine alternative Anordnung der Zahnung, wobei die Konfiguration von Rotor und Stator vertauscht sind. Es gibt wieder ein feststehendes Bauteil 3', den Stator, und ein umlauffähiges Bauteil 5', den Rotor. Der Stator ist erregbar mittels einer Wicklung 7, so daß sich am Luftspalt 8 ein magnetisches Feld ausbilden kann. Die Wicklungen 7 umschließen die Statorjoche 3a.

Die Polzähne 5b' des Rotors 5' sind ebenso wie der Kern 5a' des Rotors 5' aus einem einheitlichen Blechmaterial gebildet. Es sind im Ausführungsbeispiel zwei diametral einander gegenüberliegende Polzähne vorgesehen. Im Stator 3' befinden sich in von Wicklungen 7 freien Bereichen 3b' radial verlaufende Schlitze, die am Luftspalt 8 geschlossen sind. Die Stege 3dI' zwischen den Schlitzen in den ersten Bereichen I sind schmaler gehalten als die Stege 3dII' in den zweiten Bereichen II. Auf diese Weise ergeben sich auch bei dem aus einem einheitlichen Blechmaterial geschichteten Stator nach Fig. 5 im ersten Bereich I eine niedrige effektive Sättigungsinduktion; in dem zweiten Bereich II ergibt sich eine hohe Sättigungsinduktion. Im ungesättigten Zustand spielt zunächst die Breite der Stege und damit die unterschiedliche Sättigungsinduktion keine Rolle, so daß sich der Rotor magnetisch symmetrisch zur Statorzahnmittel verhält.

Bei der Vertauschung der Zahnung in Stator und Rotor (Fig. 1 bis 4a zu Fig. 5) ist zu beachten, daß alle typischen Elemente vertauscht werden müssen. Das heißt, für eine ordentliche Funktion muß die Stufe 5h, die sich in Fig. 1 bis 4a im Bereich des Überganges vom Bereich I zum Bereich II vor den Rotorstegen befand, nun in Fig. 5 als Stufe 3h im Übergangsbereich I/II vor den Statorstegen angebracht werden. Der Luftspalt 8 ist also im Bereich der schmaleren Stege 5dI/3dI', dem Bereich mit niedriger Sättigungsinduktion, kleiner als im Bereich der breiteren Stege 5dII/3dII' mit hoher Sättigungsinduktion.

## Patentansprüche

1. Einphasiger Reluktanzmotor, der aus einem feststehenden und einem gegenüber diesem beweglichen Bauteil (3, 5) (Stator und Rotor) gebildet wird, die zwischen sich einen Luftspalt einschließen und von denen der eine einen magnetisch durchflutbaren, ferromagnetischen Körper (5a) mit ausgeprägten Polteilen (5b) und der andere einen elektrisch erregbaren, ferromagnetischen Körper aufweisen mit ausgeprägten Polteilen (5a), wobei einer der durchflutbaren ferromagnetischen Bauteile (5) derart ausgebildet ist, daß er erste Bereiche (I) aufweist, die eine niedrige Sättigungsinduktivität aufweisen und zweite Bereiche (II), die eine höhere Sättigungsinduktivität aufweisen, die bewirken, daß eine gegebenenfalls abgeglichene Stellung des beweglichen Bauteils bei steigendem Erregerstrom durch den Einfluß der verschiedenen Sättigungseigenschaften nun unabgeglichen ist und sich das bewegliche Bauteil in Richtung auf eine neue abgeglichene Stellung zu drehen beginnt, dadurch gekennzeichnet, daß die ersten und zweiten Bereiche (I, II) aus längs des Luftspaltumfanges flächenhaft verteilten magnetisch durchflutbaren ferromagnetischen Materialien mit unterschiedlichen Sättigungseigenschaften gebildet sind und daß diese Bereiche sowohl im Rotor als auch im Stator vorgesehen sein können.

2. Einphasiger Reluktanzmotor, der aus einem feststehenden und einem gegenüber diesem beweglichen Bauteil (3, 5) (Stator und Rotor) gebildet wird, die zwischen sich einen Luftspalt einschließen und von denen der eine einen magnetisch durchflutbaren, ferromagnetischen Körper (5a) mit ausgeprägten Polteilen (5b) und der andere einen elektrisch erregbaren, ferromagnetischen Körper aufweisen mit ausgeprägten Polteilen (5a), wobei einer der durchflutbaren ferromagnetischen Bauteile (5) derart ausgebildet ist, daß er längs des Luftspaltumfanges verteilt erste Bereiche (I) aufweist, die eine niedrige Sättigungsinduktivität aufweisen und zweite Bereiche (II), die eine höhere Sättigungsinduktivität aufweisen, die bewirken, daß eine gegebenenfalls abgeglichene Stellung des beweglichen Bauteils bei steigendem Erregerstrom durch den Einfluß der verschiedenen Sättigungseigenschaften nun unabgeglichen ist und sich das bewegliche Bauteil in Richtung auf eine neue abgeglichene Stellung zu drehen beginnt, dadurch gekennzeichnet, daß das ferromagnetische Bauteil ohne Erregerwicklung im Bereich der ausgeprägten Polteile (5b) mit längs des Luftspaltumfanges flächenhaft verteilten radialen Schlitzen (5g) versehen ist und die Breite der zwischen den Schlitzen verbleibenden ferromagnetischen Stege (5dI) in den ersten Bereichen (I) mit niedriger Sättigungsinduktion kleiner ist als die Breite der Stege (5dII) zwischen den Schlitzen (5c) in den Bereichen (II) mit höherer Sättigungsinduktion.

3. Einphasiger Reluktanzmotor nach Anspruch 1 oder 2, dadurch gekennzeichnet, daß die Luftspaltbreite mindestens in einem Teil der zweiten Bereiche (II) größer als in den ersten Bereichen (I) ist.

## Claims

1. A single-phase reluctance motor comprising a stationary member (3) (stator) and a movable member (5) (rotor) which is movable relative to said stationary member, between which members an air gap is formed, one member comprising a magnetically permeable ferromagnetic body (5a) having salient pole parts (5b) and the other member comprising an electrically excitable ferromagnetic body having salient pole parts (5a), one of the permeable ferromagnetic members (5) being constructed in such a manner that it comprises first areas (I) having a low saturation induction and second areas (II) having a higher saturation induction, as result of which an aligned position of the movable member becomes non-aligned at increasing excitation current under the influence of the different saturation characteristics and the movable member begins to rotate towards a new aligned position, characterized in that the first and the second areas (I, II) are formed from magnetically permeable ferromagnetic materials with different saturation characteristics, partitioned superficially along the air-gap circumference, and said areas may be provided both in the rotor and in the stator.

2. A single-phase reluctance motor comprising a stationary member (3) (stator) and a movable member (5) (rotor) which is movable relative to said stationary member, between which members an air gap is formed, one member comprising a magnetically permeable ferromagnetic body (5a) having salient pole parts (5b) and the other member comprising an electrically excitable ferromagnetic body having salient pole parts (5a), one of the permeable ferromagnetic members (5) being constructed in such a manner that it comprises, partitioned along the air-gap circumference, first areas (I) having a low saturation induction and second areas (II) having a higher saturation induction, as result of which an aligned position of the movable member becomes non-aligned at increasing excitation current under the influence of the different saturation characteristics and the movable member begins to rotate towards a new aligned position, characterized in that the ferromagnetic member without excitation winding has radial slots (5c), partitioned superficially along the air-gap circumference, at the location of the salient pole parts (5b) and the width of the ferromagnetic webs (5dI) between the slots in the first areas (I) of lower saturation induction is smaller than the width of the webs (5dII) between the slots (5c) in the areas (II) of higher saturation induction.

3. A single-phase reluctance motor as claimed in Claim 1 or 2, characterized in that the air gap width in at least a part of the second areas (II) is larger than in the first areas (I).

## Revendications

1. Moteur monophasé à réluctance qui est formé d'un élément fixe et d'un élément mobile par rapport à celui-ci (3,5) (stator et rotor) qui renferment entre eux un entrefer et dont l'un présente un corps (5a) ferromagnétique susceptible d'être traversé par un flux magnétique présentant des parties polaires saillantes (5b) et l'autre un corps ferromagnétique excitable électriquement présentant des parties polaires saillantes (5a), l'un des éléments (5) ferromagnétiques susceptibles d'être traversés par un flux étant conçu de telle sorte qu'il présente des premières zones (I) possédant une faible inductance de saturation et des deuxièmes zones (II) possédant une inductance de saturation supérieure, ce qui garantit qu'une position éventuellement équilibrée de l'élément mobile est déséquilibrée en cas d'augmentation du courant d'excitation sous l'influence des différentes propriétés de saturation et que l'élément mobile commence alors à se tourner vers une nouvelle position équilibrée, caractérisé en ce que les premières et deuxièmes zones (I, II) sont formées de matériaux ferromagnétiques susceptibles d'être traversés par un flux magnétique et réparties sur la surface de la périphérie de l'entrefer présentant des propriétés de saturation différentes et que ces zones peuvent être prévues à la fois dans le rotor et dans le stator.

2. Moteur monophasé à réluctance qui est formé d'un élément fixe et d'un élément mobile par rapport à celui-ci (3,5) (stator et rotor), qui renferment entre eux un entrefer et dont l'un présente un corps ferromagnétique susceptible d'être traversé par un flux magnétique avec des parties polaires saillantes (5b) et l'autre un corps ferromagnétique excitable électriquement présentant des parties polaires saillantes (5a), l'un des éléments ferromagnétiques susceptibles d'être traversé par un flux (5) étant conçu de telle sorte qu'il présente des premières zones (I) réparties le long de la périphérie de l'entrefer qui présentent une faible inductance de saturation et des deuxièmes zones (II) qui présentent une inductance de saturation supérieure, ce qui permet qu'une position éventuellement équilibrée de l'élément mobile soit déséquilibrée en cas d'augmentation du courant d'excitation sous l'influence des différentes propriétés de saturation et que l'élément mobile commence dès lors à tourner dans la direction d'une nouvelle position équilibrée, caractérisé en ce que l'élément ferromagnétique sans l'enroulement d'excitation dans la zone des parties polaires saillantes (5b) est doté de fentes (5g) radiales réparties sur toute la surface le long de la périphérie de l'entrefer et que la largeur des nervures (5dI) ferromagnétiques restant entre les fentes dans les premières zones (I) présentant une faible inductance de saturation est inférieure à la largeur des nervures (5dII) entre les fentes (5c) dans les zones (II) présentant une inductance de saturation supérieure.

3. Moteur monophasé à réluctance selon l'une des revendications 1 ou 2, caractérisé en ce que la largeur de l'entrefer est, du moins dans une partie des deuxièmes zones (II), supérieure à celle des premières zones (I).
